# EUROPEAN PATENT APPLICATION

(11) **EP 4 772 979 A1**
(43) Date of publication of application: **08.07.2026**
(21) Application number: 24858647.1
(22) Date of filing: 28.08.2024
(51) Int. Cl.: G06F 3/0483, G06F 3/048

(54) **INFORMATION DISPLAY METHOD AND APPARATUS, AND ELECTRONIC DEVICE AND COMPUTER-READABLE MEDIUM**

(30) Priority: 29.08.2023 CN 202311101806
(71) Applicant: BEIJING YOUZHUJU NETWORK TECHNOLOGY CO. LTD., Beijing 101299 (CN)
(72) Inventor: XU, Xiaole, Beijing 100028 (CN)
(74) Representative: Isarpatent
(86) International application number: PCT/CN2024/115295
(87) International publication number: WO 2025/045114

(57) **Abstract**

The present disclosure discloses an information presenting method and apparatus, an electronic device and a computer readable medium. The method includes: presenting an information feed page, wherein the information feed page comprises recommendation information of at least one recommended object; and in response to a trigger operation for recommendation information of a recommended object, presenting a page for selecting attributes of the recommended object, the page for selecting attributes comprising a placing order option and attribute information of the recommended object. In this way, the present disclosure can accomplish the objective of quickly entering a page for selecting attributes using recommendation information, and thus can effectively reduce the defects caused by an excessively long interaction path to enter the page for selecting attributes, so as to further effectively improve the user experience.

## Description

### CROSS-REFERENCE TO RELATED APPLICATION(S)

The present application claims priority to Chinese Patent Application No. 202311101806.5, filed with the China National Intellectual Property Administration on August 29, 2023 and entitled " INFORMATION PRESENTING METHOD AND APPARATUS, ELECTRONIC DEVICE AND COMPUTER READABLE MEDIUM", which is incorporated herein by reference in its entirety.

### FIELD

The present disclosure generally relates to the field of Internet technologies, and more specifically, to an information presenting method and apparatus, an electronic device and a computer readable medium.

### BACKGROUND

In some application scenarios, an information feed page (e.g. a short video playing page, etc.) can be used to present users a certain object (e.g. clothes, etc.), to enable users to complete an ordering process for the object through the page.

However, the defects (e.g. a long interaction path) in the solution for ordering related objects lead to poor user experience.

### SUMMARY

The present disclosure provides an information presenting method and apparatus, an electronic device and a computer readable medium, to improve the user experience.

In order to accomplish the above-mentioned objective, the technical solution provided by the present disclosure includes:
The present application provides an information presenting method, comprising:
presenting an information feed page, wherein the information feed page comprises recommendation information of at least one recommended object; and
in response to a trigger operation for recommendation information of a recommended object, presenting a page for selecting attributes of the recommended object, the page for selecting attributes comprising a placing order option and attribute information of the recommended object.

In a possible implementation, presenting the page for selecting attributes of the recommended object, comprises:
if a preset target condition is met, presenting the page for selecting attributes of the recommended object;
wherein the preset target condition comprises a number of placing order operations of objects performed by a login account within a first historical period being not less than a first number threshold, and a number of placing order operations of objects performed by the login account within a second historical period being less than a second number threshold; and/or
the preset target condition comprises: the recommended object belonging to a target object type.

In a possible implementation, in response to the trigger operation for the recommendation information of the recommended object, presenting the page for selecting attributes of the recommended object, comprises:
in response to the trigger operation for the recommendation information of the recommended object, presenting an information aggregation page corresponding to the recommended object, and presenting the page for selecting attributes of the recommended object on the information aggregation page, wherein a size of a presenting area of the information aggregation page is greater than a size of a presenting area of the page for selecting attributes.

In a possible implementation, in the event that the information feed page is used to recommend a recommended object, the information aggregation page is an object detail page which is used to describe the recommended object in at least one dimension; or
in the event that the information feed page is used to recommend a plurality of candidate objects, the information aggregation page is an object aggregation page which is used to present object description information of the plurality of candidate objects, and the plurality of candidate objects comprises the at least one recommended object.

In a possible implementation, the information aggregation page is used to present object description information of the plurality of candidate objects;
presenting the page for selecting attributes of the recommended object on the information aggregation page comprises:
presenting, on the information aggregation page, a page for selecting attributes of a candidate object meeting a preset condition in the plurality of candidate object.

In a possible implementation, the preset condition includes: ranking first in the plurality of candidate objects, or having a highest popularity in the plurality of candidate objects (e.g., having a greatest number of followers).

In a possible implementation, the information aggregation page is an object aggregation page;
the method further comprising, after presenting the page for selecting attributes of the recommended object on the information aggregation page:
in response to a page switching operation triggered for the page for selecting attributes, presenting a page for selecting attributes of a target object corresponding to the recommended object, and the target object being determined based on the page switching operation.

In a possible implementation, the page switching operation comprises at least one swiping operation.

In a possible implementation, the information aggregation page is used to present object detail information of the plurality of candidate objects;
the method further comprises, after presenting the page for selecting attributes of the recommended object on the information aggregation page:
in response to a trigger operation for object detail information of a candidate object, other than the recommended object, in the plurality of candidate objects, presenting the page for selecting attributes of the candidate object.

In a possible implementation, the method further comprises, after presenting the page for selecting attributes of the recommended object on the information aggregation page:
in response to a page exit operation triggered for the page for selecting attributes, presenting the information aggregation page; and
in response to a page exit operation triggered for the information aggregation page, presenting the information feed page.

In a possible implementation, the information feed page is used to recommend a recommended object;
the attribute information comprises object overview information and specification attribute information, wherein the specification attribute information in each attribute dimension is non-adjustable; or
the attribute information comprises object overview information and specification attribute information, wherein the specification information in at least one attribute dimension comprises a plurality of candidate specification attribute information.

In a possible implementation, the information feed page is used to recommend a plurality of recommended objects;
wherein presenting the information feed page comprises:
presenting the information feed page, and presenting, on the information feed page, recommendation information of a portion or all of the plurality of recommended objects;
the attribute information comprises object overview information and specification attribute information, wherein the specification attribute information in each attribute dimension is non-adjustable; or
the attribute information comprises object overview information and specification attribute information, wherein the specification attribute information in at least one attribute dimension comprises a plurality of candidate specification attribute information.

In a possible implementation, the method further comprises, after presenting the page for selecting attributes of the recommended object in response to the trigger operation for the recommendation information of the recommended object:
in response to a page switching operation triggered for the page for selecting attributes of the recommended object, presenting a page for selecting attributes of a target object corresponding to the recommended object, and the target object being determined based on the page switching operation.

The present disclosure provides an information processing apparatus, comprising:
a first presenting unit for presenting an information feed page, wherein the information feed page comprises recommendation information of at least one recommended object; and
a second presenting unit for, in response to a trigger operation for recommendation information of a recommended object, presenting a page for selecting attributes of the recommended object, the page for selecting attributes comprising a placing order option and attribute information of the recommended object.

The present disclosure provides an electronic device, comprising: a processor and a memory;
the memory for storing an instruction or computer program;
the processor, when executing the instruction or computer program in the memory, causing the electronic device to perform the information presenting method provided by the present disclosure.

The present disclosure provides a computer readable medium having an instruction or computer program stored therein, wherein the instruction or computer program, when executed on a device, causing the device to perform the information presenting method provided by the present disclosure.

The present disclosure provides a computer program product comprising a computer program carried on a non-transient computer readable medium, wherein the computer program comprises program code for executing the information presenting method provided by the present disclosure.

### BRIEF DESCRIPTION OF THE DRAWINGS

In order to make clearer the technical solution according to the embodiments of the present disclosure, brief introduction of the drawings required in the respective embodiments or the related description will be provided below. It would be appreciated that the drawings described below only illustrate some embodiments of the present disclosure, on the basis of which the ordinary skill in the art could derive other related drawings, without doing creative work.
Fig. 1 illustrates a flowchart of an information presenting method provided by embodiments of the present disclosure;
Fig. 2 illustrates a schematic diagram of an information feed page provided by embodiments of the present disclosure;
Fig. 3 illustrates a schematic diagram of a page interaction process provided by embodiments of the present disclosure;
Fig. 4 illustrates a schematic diagram of a page interaction process provided by embodiments of the present disclosure;
Fig. 5 illustrates a schematic diagram of a page interaction process provided by embodiments of the present disclosure;
Fig. 6 illustrates a schematic diagram of a page interaction process provided by embodiments of the present disclosure;
Fig. 7 illustrates a schematic diagram of a page interaction process provided by embodiments of the present disclosure;
Fig. 8 illustrates a schematic diagram of a page interaction process provided by embodiments of the present disclosure;
Fig. 9 illustrates a schematic diagram of a page interaction process provided by embodiments of the present disclosure;
Fig. 10 illustrates a schematic diagram of a structure of an information presenting apparatus provided by embodiments of the present disclosure; and
Fig. 11 illustrates a schematic diagram of a structure of an electronic device provided by embodiments of the present disclosure.

### DETAILED DESCRIPTION OF EMBODIMENTS

Through researches, it is found that, in some related solutions, when watching a short video playing page that is used to recommend an object (e.g. an item), a user needs to perform multiple steps to implement an ordering process for the object (for example, clicking on an item anchor of the item → entering the item detail page, then triggering some operations for the item detail page → entering a page for selecting attributes, and further triggering some operations for the page for selecting attributes to complete the ordering process for the item, and the like). Those solutions involve an excessively long interaction path, thus affecting the user experience.

Based on the above findings, the present disclosure provides an information presenting method, including: in an event that an information feed page (e.g. a short video playing page, and the like) is being presented, which includes recommendation information of at least one recommended object (e.g. item anchor(s) of one or more items, and the like), presenting a page for selecting attributes of a recommended object upon detecting a trigger operation on recommendation information of the recommended object (e.g. a click operation triggered for an item anchor of a certain item). As such, a user cannot only view attribute information of the recommended object on the page for selecting attributes, but can also trigger an ordering process for the recommended object by means of a placing order option (e.g. a placing order button, and the like). In this way, the present disclosure can accomplish the objective of quickly entering a page for selecting attributes using recommendation information, and thus can effectively reduce the defects caused by the long interaction path to enter the page for selecting attributes, so as to further effectively improve the user experience.

In addition, the performer of the information presenting method provided by the embodiments of the present disclosure is not limited herein. For example, the information presenting method provided by the embodiments of the present disclosure can be applied to a terminal device or a server. For another example, the information presenting method provided by the embodiments of the present disclosure may be implemented by means of a data interaction process between a terminal device and a server. Wherein, the terminal device may be a smartphone, a computer, a Personal Digital Assistant (PDA), a tablet, and the like. The server may be an independent server, a cluster server or a cloud server.

In order to make those skilled in the art better understand the solution of the present disclosure, a clear and complete description on the technical solution according to the embodiments of the present disclosure will be provided with reference to the drawings. Obviously, the embodiments disclosed herein are a portion, not all, of the embodiments of the present disclosure. On the basis of those embodiments described herein, the ordinary skill in the art could derive all the other embodiments, without doing creative work, which also fall into the protection scope of the present disclosure.

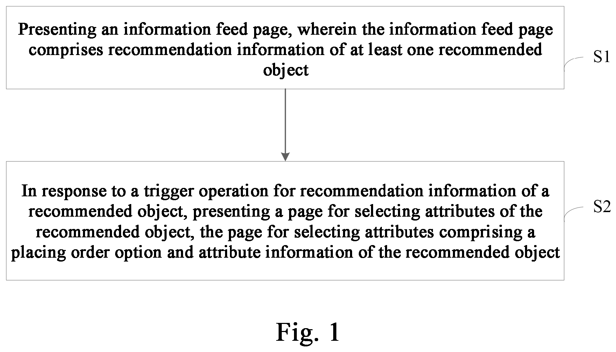

For ease of understanding on the technical solution provided by the present disclosure, the information presenting method provided by the present disclosure will be described below with reference to some drawings. As shown in Fig. 1, the information presenting method provided by embodiments of the present disclosure includes S1-S2 described below. Wherein, Fig. 1 is a flowchart of an information presenting method provided by embodiments of the present disclosure.

S1: presenting an information feed page, wherein the information feed page comprises recommendation information of at least one recommended object.

The information feed page is used to present certain information (e.g. multimedia data such as short video data, image-text sequence data, or the like), to enable users to view the information through the information feed page. The short video data includes a plurality of frames of video images arranged in sequence. The image-text sequence data includes a plurality of pieces of image-text data arranged in sequence, where the image-text data refers to image data carrying text information.

Moreover, the implementation of the information stream page as described above is not limited herein. For example, in some application scenarios, the information feed page can be implemented using a video playing page (e.g. a live video playing page, or a short video playing page).

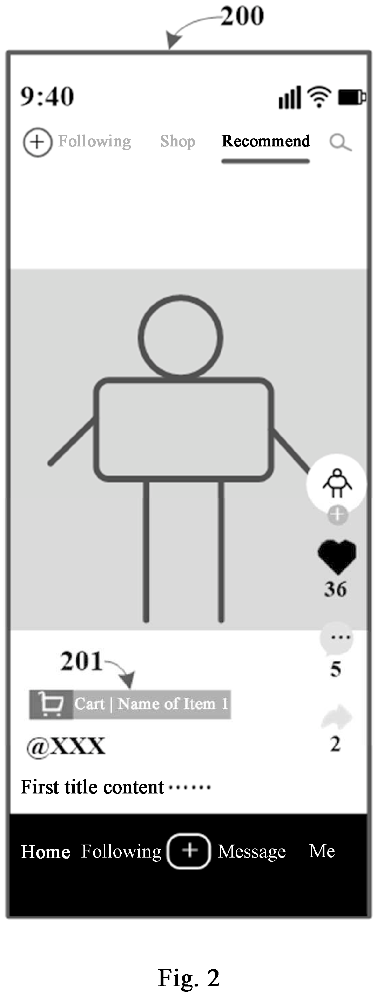

In addition, for the information feed page as described above (e.g., a short video playing page 200 in Fig. 2), in some application scenarios, the information feed page may include recommendation information of at least one recommended object (e.g., an item anchor control 201 in Fig. 2), to allow the user to implement, by means of recommendation information of any recommended object, an ordering process for the corresponding recommended object. The recommended object is an object (e.g. an item, a service, or the like) recommended by the information feed page. The recommended object is not limited herein. For example, the recommended object may be an item (e.g. clothes, shoes, or the like). For another example, the recommended object may be a service (e.g. hair cutting, information consultation, or the like).

The number of recommended objects involved in the information feed page described above is not limited herein. For example, in some application scenarios (e.g. a scenario of recommending a single item), if the information feed page is used to recommend a recommended object, the information feed page may include recommendation information of the recommended object.

For another example, in some application scenarios (e.g., a scenario of recommending multiple items), if the information feed page described above is used to recommend a plurality of recommended objects, the information feed page may include recommendation information of all or a portion of the plurality of recommended objects, to subsequently complete an ordering process for those recommended objects through some operations triggered for the recommendation information.

It is worth noting that the present disclosure is not limited to the implementation of the information feed page described in the above paragraph. For example, in some application scenarios, the information feed page can directly present recommendation information of an object ranked first in the plurality of recommended object. For another example, in some application scenarios, the information feed page can directly present recommendation information of all of the plurality of recommended objects. For a further example, in some application scenarios, the information feed page can first present recommendation information of an object ranked first in the plurality of recommended objects, and then present recommend information of all of the plurality of recommended objects if a certain condition (for example, a video playing progress reaching a preset progress threshold, detecting that a certain operation is triggered for the information feed page, or the like) is met.

From the above two paragraphs, it could be learned that, in a possible implementation, when the information feed page described above is used to recommend a plurality of recommended objects, S1 may specifically include: presenting the information feed page, and presenting, on the information feed page, recommendation information of a portion or all of the plurality of recommended objects. It is to be noted that the manner of presenting the recommendation information is not limited herein. For example, the recommended information of the portion or all of the recommended objects can be presented by means of a control (e.g. an item anchor 201 in Fig. 2). For another example, in some application scenarios, the recommend information of the portion or all of the recommended objects can be presented in the form of cards.

In practice, recommendation information of any recommended object is used to describe the recommended object. The implementation of the recommendation information of the recommended object is not limited herein. For example, in some application scenarios, the recommendation information of the recommended object may at least include an object entry identifier corresponding to the recommended object. Wherein, the object entry identifier corresponding to the recommended object is used to identify a view entry of related information of the recommended object. The implementation of the object entry identifier is not limited herein. For example, the object entry identifier may be implemented using an anchor (e.g. an item anchor control 201 in Fig. 2).

From the above related description about S1, it could be learned that, when an electronic device is presenting an information feed page that includes recommendation information of at least one recommended object, a user can quickly complete an ordering process of the corresponding recommended object by triggering some operations for the recommendation information.

S2: in response to a trigger operation for recommendation information of a recommended object, presenting a page for selecting attributes of the recommended object, the page for selecting attributes comprising a placing order option and attribute information of the recommended object.

The "trigger operation for recommendation information of a recommended object" as used above refers to an operation trigger for the recommendation information to enter an associated page of the recommended object (e.g. a page for selecting attributes corresponding to the recommended object, and the like). The present disclosure is not limited to the "trigger operation for recommendation information of a recommended object." For example, when the recommendation information includes an object entry identifier corresponding to the recommended object, and the object entry identifier is implemented using the item anchor control 201 in Fig. 2, the "trigger operation for recommendation information of a recommended object" may be a click operation triggered for the item anchor control 201.

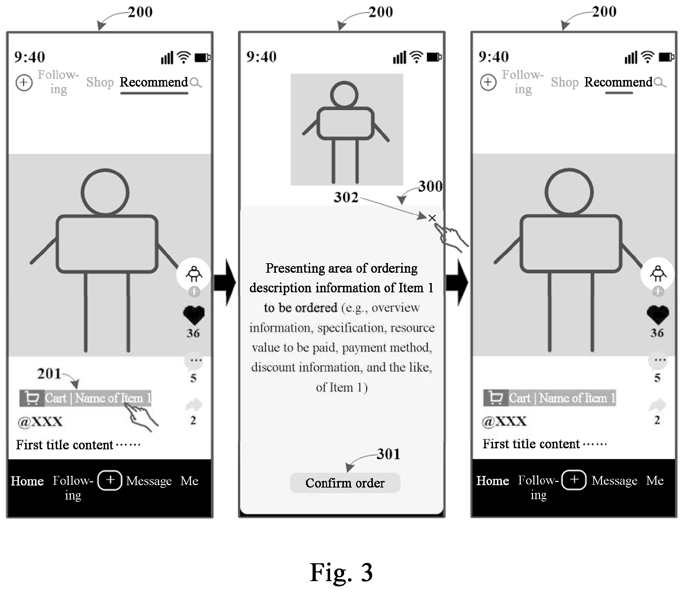

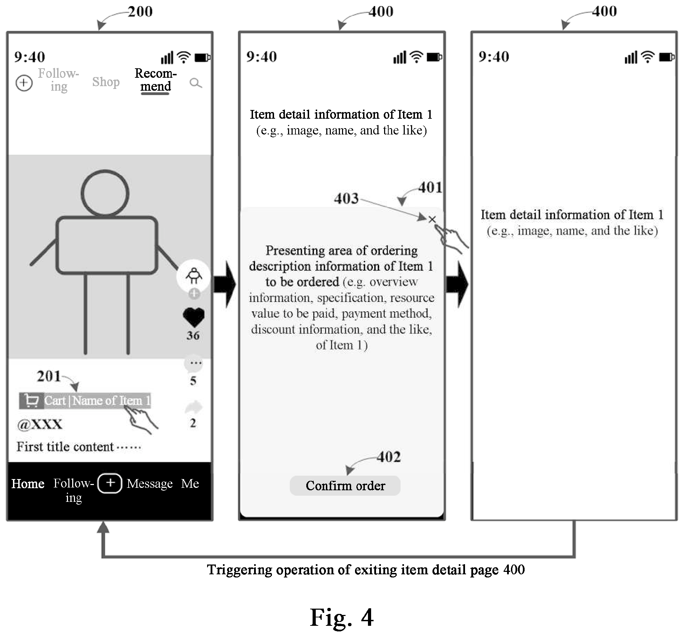

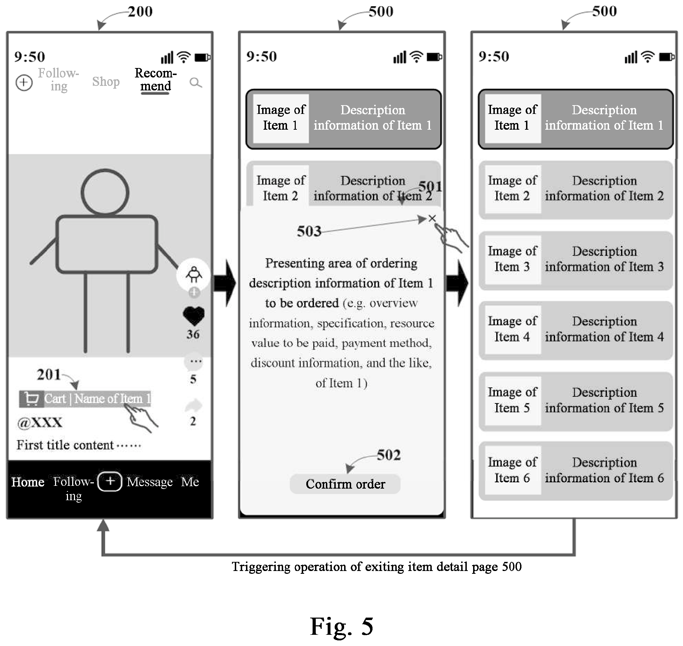

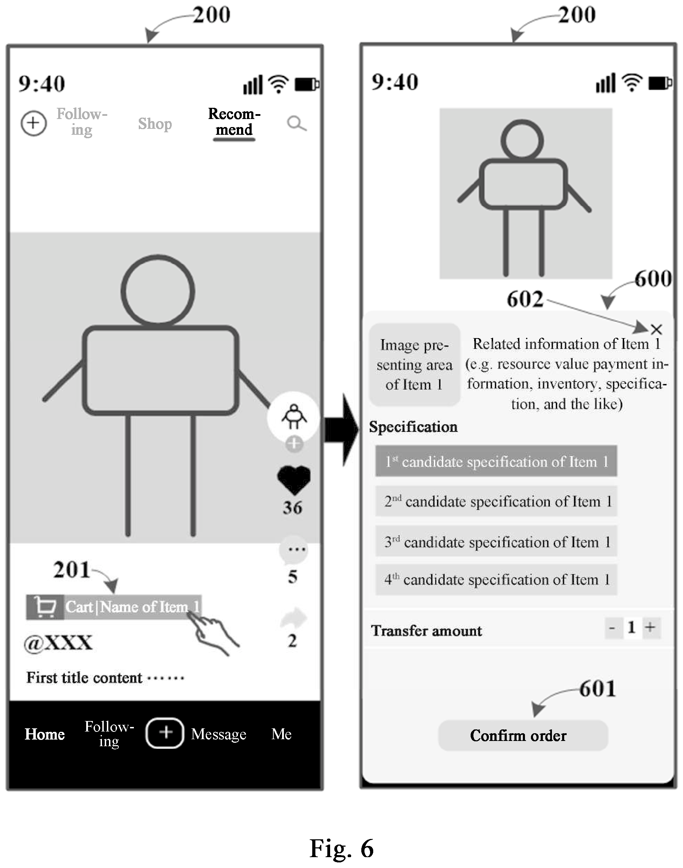

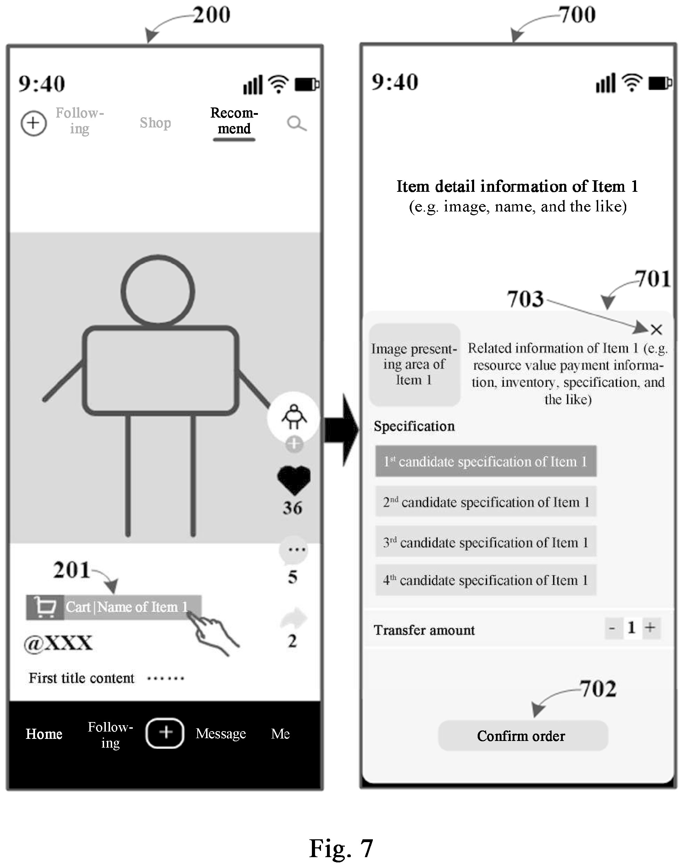

In addition, for any recommended object, a page for selecting attributes of the recommended object is used to implement an ordering process for the recommended object. For example, the page for selecting attributes of the recommended object may be implemented using a page for selecting attributes 300 in Fig. 3, a page for selecting attributes 401 in Fig. 4, a page for selecting attributes 501 in Fig. 5, a page for selecting attributes 600 in Fig. 6, or a page for selecting attributes 701 in Fig. 7.

For any recommended object, a page for selecting attributes of the recommended object may include a placing order option, and attribute information of the recommended object. Wherein, the placing order option is used to trigger an ordering process for the recommended object. The implementation of the placing order option is not limited herein. For example, in some application scenarios, the placing order option may include a control corresponding to at least one ordering manner (e.g. a confirm order button 301 in Fig. 3, a confirm order button 402 in Fig. 4, a confirm order button 502 in Fig. 5, or the like), to subsequently complete, by triggering a control corresponding to a certain ordering manner, an ordering processing for the recommended object according to the ordering manner. Wherein, the ordering manner refers to a manner that can be selected when placing an order for a recommended object. The at least one ordering manner is not limited herein. For example, the at least one ordering manner may specifically include one or more of a direct ordering manner, and an adding-to-cart manner.

For any recommended object, attribute information of the recommended object is used to describe a status of the recommended object in at least one aspect. The implementation of the attribute information of the recommended object is not limited herein. For ease of understanding, description below will be made in conjunction with four cases.

Case 1: if the information feed page described above is used to recommend an object, attribute information of the recommended object (e.g., Item 1 in Fig. 4) corresponding to the "triggering operation" in S2 may include object overview information and specification attribute information, where the specification attribute information in each attribute dimension is non-adjustable. The object overview information is used to briefly describe a status of the recommended object in at least one aspect (e.g., aspects of image, item name, item value, and the like). The object overview information is not limited herein. For example, the object overview information may include one or more of a placing order resource value, an object description image, and an object name, where: the ordering resource value refers to a resource value to be paid when placing an order for the recommended object; the object description image is used to describe the recommended object in the form of image; and the object name is used to identify the recommended object. In addition, any attribute dimension refers to a certain type of attribute (e.g. color, or the like) of the recommended object; specification attribute information in the attribute dimension is used to describe a status (e.g. white, or the like) of the recommended object in the attribute dimension.

In a possible implementation, in an event that the information feed page described above (e.g. the short video playing page 200 involved in Fig. 4) is only used to recommend a recommended object, and the recommended object is an object of a single specification type, when the information feed page is presenting recommendation information of the recommended object, a page for selecting attributes of the recommended object (e.g. the page for selecting attributes 401 in Fig. 4) is presented upon detecting a trigger operation for the recommendation information. At this time, the page for selecting attributes presents not only a placing order option (e.g., the confirm order button 402 in Fig. 4) but also specification attribute information of the recommended object in a fixed state in each attribute dimension, such that a user can acquire a specification of the object to be ordered from the page for selecting attributes.

Case 2: if the information feed page described above is used to recommend an object, attribute information of the recommended object (e.g., Item 1 in Fig. 7) corresponding to the "triggering operation" in S2 may include object overview information and specification attribute information, where specification attribute information in at least one attribute dimension includes a plurality of candidate specification attribute information (e.g. the first candidate specification, ..., the fourth candidate specification in Fig. 7). The page for selecting attributes of the recommended object includes some candidate specification attribute information in one or more attribute dimensions, to enable a user to subsequently select a specification attribute in line with his/her ordering need from the candidate specification attribute information. The candidate specification attribute information refers to a selectable specification (e.g. the first candidate specification in Fig. 7, or the like) preset for a candidate dimension.

In a possible implementation, in an event that the information feed page described above (e.g., the short video playing page 200 involved in Fig. 7) is only used to recommend an object, and the recommended object is an object of a multi-specification type, when the information feed page is presenting recommend information of the recommended object, a page for selecting attributes (e.g. the page for selecting attributes 601 in Fig. 7) of the recommended object is presented upon detecting a trigger operation for the recommendation information. At this time, the page for selecting attributes presents not only a placing order option (e.g. the confirm order button 702 in Fig. 7) but also specification attribute information of the recommended object in a selectable state in each attribute dimension, such that a user can select specification information in line with his/her ordering need by means of the page for selecting attributes.

Case 3: if the information feed page described above is used to recommend a plurality of objects, for a recommended object (e.g., Item 1 in Fig. 5) corresponding to the "trigger operation" in S2, a page for selecting attributes of the recommended object can be presented because related information of the recommended object desired to be viewed by a user can be determined after the user triggered an operation for the recommend information of the recommended object, and the page for selecting attributes presents at least attribute information of the recommended object. The attribute information of the recommended object may include object overview information and specification attribute information, where the specification attribute information in each attribute dimension is non-adjustable.

In a possible implementation, in an event that the information feed page (e.g. the short video playing page 200 involved in Fig. 5) is used to recommend a plurality of objects (e.g. Item 1, Item 2, and the like, in Fig. 5), when the information feed page is presenting all or a portion of the plurality of recommended objects, a page for selecting attributes (e.g. the page for selecting attributes in Fig. 5) of a recommended object is presented, after determining that the recommended object is an object of a single-specification type upon detecting a trigger operation for recommendation information. At this time, the page for selecting attributes presents not only a placing order option (e.g. the confirm order button 502 in Fig. 5) but also specification attribute information of the recommended object in a fixed state in each attribute dimension, such that a user can acquire a specification of the object to be ordered from the page for selecting attributes.

Case 4: if the information feed page is used to recommend a plurality of objects, for a recommended object corresponding to the "trigger operation" in S2, a page for selecting attributes of the recommended object can be presented because related information of the recommended object desired to be viewed by a user can be determined after the user triggered an operation for the recommend information of the recommended object, and the page for selecting attributes presents at least attribute information of the recommended object. The attribute information of the recommended object may include object overview information and specification attribute information, where the specification attribute information in at least one attribute dimension includes a plurality of candidate attribute information.

In a possible implementation, in an event that the information feed page is used to recommend a plurality of objects, when the information feed page is presenting all or a portion of the plurality of recommended objects, a page for selecting attributes of a recommended object is presented, after determining that the recommended object is an object of a multi-specification type upon detecting a trigger operation for recommendation information. At this time, the page for selecting attributes presents not only a placing order option but also a plurality of candidate specification attribute information of the recommended object in a selectable state in each attribute dimension, such that a user can select specification information in line with his/her ordering need by means of the page for selecting attributes.

It is to be noted that, in some application scenarios, the "attribute information of a recommended object" described in above two paragraphs may include not only a plurality of attribute specification attribute information in some attribute dimensions, but also specification attribute information in a fixed state in some other attribute dimensions. In some other application scenarios, the "attribute information of a recommended object" may also include specification attribute information (e.g. attributes such as item resource value, and the like) in an adjustable state in some further attribute dimensions, where the specification attribute information in the adjustable state can be adjusted as a user triggers a selection operation for the plurality of candidate specification attribute information.

From the four cases described above, it could be learned that, if a recommended object is an object of a single-specification type, attribute information of the recommended object presented in the page for selecting attributes of the recommended object may include specification attribute information in at least one attribute dimension, where the specification attribute information in each attribute dimension is non-adjustable; if a recommended object is an object of a multi-specification type, attribute information of the recommended object presented on the page for selecting attributes of the recommended object may include specification attribute information in one or more attribute dimensions, where the specification attribute information in each attribute dimension includes a plurality of candidate specification attribute information.

Moreover, the implementation of S2 is not limited herein. For ease of understanding, description below will be provided in conjunction with two examples.

Example I: in a possible implementation, S2 may specifically include: in response to a trigger operation for recommendation information for a recommended object, presenting, on the information feed page, a page for selecting attributes of the recommended object (e.g. the page for selecting attributes 300 in Fig. 3, or the page for selecting attributes 600 in Fig. 6) in a preset manner, to implement an ordering process for the recommended object, without leaving the information feed page. Wherein, the preset manner can be set in advance according to an application scenario. The preset manner is not limited herein. For example, the preset manner can be implemented by dropping down the page (for example, dropping down the page for selecting attributes 300 in Fig. 3, or on the page for selecting attributes 600 in Fig. 6). For example, the preset manner may be implemented using a pop-up window.

Example II: in a possible implementation, S2 may specifically include: in response to a trigger operation for recommendation information of a recommended object, if the preset target condition is met, presenting a page for selecting attributes of the recommended object.

The preset target condition refers to a condition required to determine whether an immediate ordering process will be performed for a recommended object. The preset target condition is not limited herein. For example, the preset target condition may be defined according to the actual application scenario. For ease of understanding, description will be made in conjunction with some case.

Case 1: in some application scenarios, processes of presenting a page for selecting attributes may be varied for different user groups.

For Case 1 described above, the present disclosure provides a possible implementation of the preset target condition. In the implementation, when the information presenting method provided by the present disclosure is applied to an electronic device, the preset target condition may specifically include: a number of placing order operations of objects performed by a login account within a first historical period being not less than a first number threshold, and a number of placing order operations of objects performed by the login account within a second historical period being less than a second number threshold. The login account is an account used by a user to view the information feed page described above, and the login account therefore can represent a user of the electronic device. The object ordering operation functions to trigger an ordering process for an object.

It is worth nothing that the association between the "first historical period" and the "second historical period," as described above, is not limited herein. For example, in some application scenarios, the second historical period may refer to a period close to a current time point in the first historical period. In a possible implementation, when the first historical period is (a first time point, a second time point), where the first time point is before the second time point, and the second time point is after the current time point, the second historical period may be (a third time point, the second time point), where the third time point is before the second time point, and the third time point is after the first time point.

It is worth noting that the association between the "first number threshold" and the "second number threshold," as described above, is not limited herein. For example, in some application scenarios, the second historical period may be a period close to a current time point in the first historical period, and the second number threshold (e.g. 1) is not greater the first number threshold (e.g. 1, 2, 3, or the like).

From the above four paragraphs, it could be learned that, in an event that the electronic device is presenting an information feed page that includes recommendation information of at least one recommended object, if the electronic device detects a trigger operation for recommendation information of a recommended object, whether the number of placing order operations of objects performed by the login account of the electronic device within the first historical period is not less than the first number threshold can be determined, and whether the number of placing order operations of objects performed by the login account within the second historical period is less than the second number threshold can be determined. Accordingly, when it is determined that the number of placing order operations of objects performed by the login account within the first historical period is not less than the first number threshold, and the number of placing order operations of objects performed by the login account within the second historical period is less than the second number threshold, the preset target condition is met, and an immediate ordering process for the recommended object (e.g. direct entry into a page for selecting attributes of the recommended object, and the like) can be performed accordingly.

Case 2: in some application scenarios, processes of presenting a page for selecting attributes may be varied for different types of objects.

For Case 2 described above, the present disclosure provides a possible implementation of the preset target condition described above. In the implementation, the preset target condition may be that the recommended object described above belongs to a type of objects that can be directly ordered. The type of objects that can be directly ordered refers to a type of objects for which an immediate ordering process is directly triggered by means of recommendation information thereof.

It is worth noting that the process of determining the "type of objects that can be directly ordered," as described above, is not limited herein. For example, such determination can be implemented by means of label information. On the basis, in a possible implementation, for any recommended object, if label information of the recommended object contains a preset immediate-ordering label, it can be determined that the recommended object belongs to the type of objects that can be directly ordered; if not, it can be determined that the recommended object does not belong to the type of objects that can be directly ordered. The preset immediate-ordering label is a label preset according to an application scenario and representing whether an immediate ordering process can be triggered directly for an object by means of recommendation information thereof.

From the above three paragraphs, it could be learned that, in some application scenarios, in an event that an information flow page is being presented, which includes an object entry identifier corresponding to at least one recommended object, if a trigger operation for recommendation information of a recommended object is detected, whether the recommended object belongs to the type of objects that can be directly ordered can be determined. Accordingly, when the recommended object is determined to belong to the type of objects that can be directly ordered, it can be determined that the preset target condition is met, and an immediate ordering process (e.g. direct entry into a page for selecting attributes of the recommended object, or the like) can thus be performed for the recommended object.

Case 3: in some application scenarios, processes for presenting a page for selecting attributes may be varied for different user groups, and processes for presenting a page for selecting attributes may also be varied for different types of objects.

For Case 3 described above, the present disclosure provides a possible implementation of the preset target condition as described above. In the implementation, when the information presenting method provided by the present disclosure is applied to an electronic device, the preset target condition may specifically include: a number of placing order operations of objects performed by a login account of the electronic device within a first historical period being not less than a first number threshold, a number of placing order operations of objects performed by the login account within a second historical period being less than a second number threshold, and the recommended object belonging to a type of objects that can be directly ordered.

From the above two paragraphs, it could be learned that, in some application scenarios, in an event that an electronic device is presenting an information feed page that includes an object entry identifier corresponding to at least one recommended object, if the electronic device detects a trigger operation for recommendation information of a recommended object, whether the number of placing order operations of objects performed by a login account of the electronic device within the first historical period is less than the first number threshold can be determined, whether the number of placing order operations of objects performed by the login account within the second historical period is less than the second number threshold can be determined, and whether the recommended object belongs to a type of objects that can be directly ordered. Therefore, when determined that the number of placing order operations of objects performed by the login account within the first historical period is not less than the first number threshold can be determined, the number of placing order operations of objects performed by the login account within the second historical period is less than the second number threshold, and the recommended object belongs to a type of objects that can be directly ordered, the preset target condition is met, and an immediate ordering process for the recommended object (e.g. direct entry into a page for selecting attributes of the recommended object, and the like) can be performed accordingly.

From the related contents about the preset target condition, it could be learned that, in some application scenarios, when an electronic device is presenting an information feed page that includes recommendation information of at least one recommended object, if a trigger operation for recommendation information of a recommended object is detected, whether the preset target condition is met can be determined first. Therefore, when determined that the preset target condition is met, it can be determined to perform an immediate ordering process for the recommended object, and directly entering the page for selecting attributes of the recommended object can be performed accordingly. In this way, the present disclosure can accomplish the objective of directly entering the page for selecting attributes from the recommendation information, to thus simplify the ordering process and further improve the user experience.

From the related contents about S 1-S2, it could be learned that, according to the information presenting method provided by the embodiments of the present disclosure, when an information presenting page (e.g. a short video playing page, or the like) is being presented, which includes recommendation information of at least one recommended object (e.g. item anchor(s) of one or more items), if a trigger operation for recommendation information of a recommended object (e.g., a click operation triggered for an item anchor for an item), a page for selecting attributes of the recommended object can be presented. As such, a user cannot only view attribute information of the recommended object on the page for selecting attributes, but can also trigger an ordering process for the recommended object by means of a placing order option (e.g. a placing order option, or the like). In this way, the present disclosure can accomplish the objective of quickly entering a page for selecting attributes using recommendation information, and thus can effectively reduce the defects caused by an excessively long interaction path to enter the page for selecting attributes, so as to further effectively improve the user experience.

In practice, in some application scenarios, a user may desire to exit the page for selecting attributes to continue to view the information feed page. On the basis, the present disclosure further provides a possible implementation of the information presenting method. In the implementation, the information presenting method includes not only S1-S2, but also step 11 which will be described below. Wherein, step 11 is executed after S2.

Step 11: subsequent to presenting a page for selecting attributes of a recommended object, in response to a page existing operation triggered for the page for selecting attributes, presenting the information feed page.

It is worth nothing that the implementation of the "page existing operation triggered for the page for selecting attributes" in step 11 is not limited herein. For example, when the page for selecting attributes is being presented on the information feed page by dropping down, the "page existing operation triggered for the page for selecting attributes" may be a drop-down operation performed from the top to the bottom of the page for selecting attributes. For another example, if the page for selecting attributes further includes a page closing control (e.g. the page closing control 302 in Fig. 3, or the page closing control 602 in Fig. 6), the "page existing ordering operation triggered for the page for selecting attributes" may be a click operation triggered for the page closing control. The page closing control is used to trigger an exist process for the page for selecting attributes. The page closing control is not limited herein.

From the related contents about step 11, it could be learned that, when an electronic device is presenting a page for selecting attributes (e.g. the page for selecting attributes 300 in Fig. 3) corresponding to the recommended object, if a page exit operation triggered for the page for selecting attributes is detected, direct return is performed to present the information feed page. In this way, return can be implemented from the page for selecting attributes to the information feed page in one step (e.g. a 1-step return process in Fig. 3), thus simplifying the return path and further improving the user experience.

In some application scenarios, while viewing the page for selecting attributes, a user may desire to view other information (e.g. object details, other recommended objects, and the like). On the basis, the present disclosure further provides a possible implementation of the information presenting method. In the implementation, the information presenting method may include step 31 which will be described below.

Step 31: in response to a trigger operation for recommendation information of a recommended object, presenting an information aggregation page corresponding to the recommended page, and presenting the page for selecting attributes of the recommended object on the information aggregation page.

The information aggregation page corresponding to the recommended object is used to aggregate and present some information related to the recommended object (e.g. some introductions of the recommended object, other items associated somehow with the recommended object, or the like). For example, the information aggregation page corresponding to the recommended object may be, for example, an item detail page in Fig. 4, or a multi-item recommendation page in Fig. 5.

In different application scenarios, the information aggregation page corresponding to the recommended object may be implemented in different manners. Therefore, in order to better meet the need, the present disclosure further provides an implementation of the information aggregation page corresponding to the recommended object. In the implementation, if the information feed page is used to recommend only one object, the information aggregation page may be an object detail page (e.g. an item detail page 400 in Fig. 4) of the recommended object, which is used to describe the recommended object in at least one dimension, to enable a user to acquire some introductions (e.g., an image, a name, a shop, a popularity, and the like) of the recommended object from the object detail page. However, if the information feed page is used to recommend a plurality of recommended objects, the information aggregation page may be an object aggregation page (e.g. a multi-item recommendation page 500 in Fig. 5) that is used to present object description information of a plurality of candidate objects including the at least one recommended object described above. Wherein, the candidate object is an object with information that is introduced by means of the object aggregation page.

It is worth noting that the implementation of the object aggregation page as described in the previous paragraph is not limited herein. For example, when the object aggregation page is used to present a plurality of candidate objects (e.g. Item 1 through Item 6 in Fig. 5) presented in a preset order, the recommended object corresponding to the "trigger operation" in step 31 may correspond to a first place in the preset order, to enable a user to quickly view the recommended object from the object aggregation page.

It is worth noting that the object detail page described above is used to describe related information of an object (e.g. a recommended object corresponding to the "trigger operation" in step 31) in at least one dimension. The implementation of the object detail page is not limited herein. Moreover, the implementation of "at least one dimension" is not limited herein, which may include dimensions for describing an image of an object, for example, a name, a popularity, a shop, and the like, of the object.

In addition, the implementation of "presenting the page for selecting attributes of the recommended object on the information aggregation page" in step 31 is not limited herein. For example, in some application scenarios, presenting may be implemented in a full coverage manner. In other words, in a possible implementation, step 31 may specifically include: in response to a trigger operation for recommendation information of a recommended object, presenting an information aggregation page corresponding to the recommended object, and presenting a page for selecting attributes of the recommended object on the information aggregation page, such that the page for selecting attributes is presented in a manner of fully covering the upper part of the information aggregation page.

For another example, in some application scenarios, in order to better meet the information viewing needs of users, presenting may be implemented in a partial coverage manner. In other words, in a possible implementation, step 31 may specifically include: in response to a trigger operation for recommendation information of a recommended object, presenting an information aggregation page corresponding to the recommended object, and presenting a page for selecting attributes of the recommended object on the information aggregation page in such manner that a size of a presenting area of the information aggregation page is greater than a size of the presenting area of the page for selecting attributes, so that the page for selecting attributes occupies only a partial area of the information aggregation page. Wherein, the size of the presenting area of the information aggregation page is a size of an area occupied for presenting the information aggregation page. The implementation of the presenting area of the information aggregation page is not limited herein, for example, which may be a full screen area. In other words, the information aggregation page may be presented in a full screen manner (e.g. the full screen presenting manner presented by the item detail page 400 in Fig. 400, or the full screen presenting manner presented by the multi-item recommendation page 500 in Fig. 5). The size of the presenting area of the page for selecting attributes is a size of an area occupied for presenting the page for selecting attributes. The implementation of the presenting area of the page for selecting attributes is not limited herein, for example, which may be a 7-split screen area. That is, the page for selecting attributes may be presented in a 7-split manner (e.g., a 7-split screen manner presented by the page for selecting attributes 401 in Fig. 4, or the 7-split screen manner presented by the page for selecting attributes 501 in Fig. 5).

From step 31 described above, it could be learned that, in some application scenarios, in an event that an information feed page is being presented, which includes recommendation information of at least one recommended object, if a trigger operation for recommendation information of a recommended object, an information aggregation page (e.g. the item detail page 400 in Fig. 4, or the multi-item recommendation page 500 in Fig. 5) corresponding to the recommended object is presented in a full screen. In this way, the present disclosure cannot only accomplish the objective of directly entering a page for selecting attributes of a recommended object from recommendation information of the recommended object, but can also enable users to view other information while browsing the page for selecting attributes, so as to improve the user experience.

In some application scenarios, in order to better improve the user experience, the present disclosure further provides a possible implementation of step 31. In the implementation, if the information feed page is used to recommend a plurality of candidate objects that includes the at least one recommended object described above, step 31 may specifically include: in response to a trigger operation for recommendation information of a recommended object, presenting an object aggregation page corresponding to the recommended object, and presenting, on the object aggregation page, a page for selecting attributes of a candidate object meeting a preset condition in the plurality of candidate objects. Wherein, the preset condition refers to an object filtering condition for presenting a page for selecting attributes on the object aggregation page. The implementation of the preset condition is not limited herein, for example, which may specifically be: a candidate object ranked first in the plurality of candidate objects, or having the highest popularity (e.g. having the greatest number of followers) in the plurality of candidate objects.

In a possible implementation, in an event that an information feed page is being presented, which is used to recommend a plurality of candidate objects, if a trigger operation for recommendation information of a recommended object is detected, an object aggregation page (e.g. the multi-item recommendation page 500 in Fig. 5) corresponding to the recommended object is presented in a full screen while a page for selecting attributes (e.g. a page for selecting attributes 501 in Fig. 5) of a candidate object ranked first is being presented on the information aggregation page in the 7-split screen presenting manner.

For an application scenario of implementing an object ordering process through step 31, in order to meet the information viewing needs of users, a 2-step return strategy may be used to implement the process of returning from the page for selecting attributes to the information feed page. On the basis, the present disclosure further provides a possible implementation of the information presenting method. In the implementation, the information presenting method may at least include step 31 described above, and steps 32 and 33 which will be described below. Wherein, step 32 is executed after step 31.

Step 32: subsequent to presenting the page for selecting attributes of the recommended object on the information aggregation page corresponding to the recommended object, in response to a page exit operation triggered for the page for selecting attributes, presenting the information aggregation page corresponding to the recommended object.

It is worth noting that the implementation of the "page exit operation triggered for the page for selecting attributes" in step 32 is not limited herein. For example, the implementation of the "page exit operation triggered for the page for selecting attributes" is similar to the implementation of the "page exit operation triggered for the page for selecting attributes" in step 11, and details thereof are omitted herein for brevity.

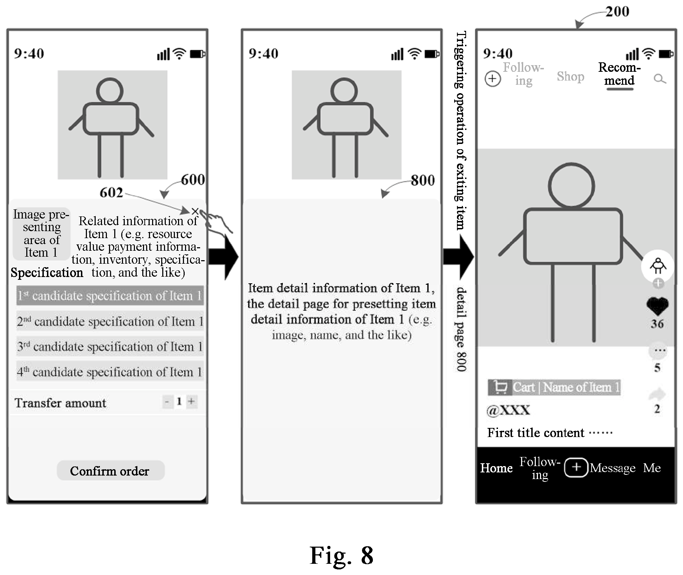

From the previous paragraph, it could be learned that, in a possible implementation, step 32 may specifically include: subsequent to presenting the page for selecting attributes of the recommended object on the information aggregation page corresponding to the recommended object, in response to a trigger operation for a page closing control on the page for selecting attributes, presenting an information aggregation page corresponding to the recommended object. The page closing control is used to trigger an exit process for the page for selecting attributes. The implementation of the page closing control is not limited herein. For example, it may be implemented using the page closing control 403 in Fig. 4, the page closing control 503 in Fig. 5, the page closing control 703 in Fig. 7, or the page closing control 602 in Fig. 8.

Step 33: in response to a page exit operation triggered for the information aggregation page corresponding to the recommended object, presenting the information feed page.

It is worth noting that the present disclosure is not limited to the implementation of the "page exist operation triggered for the information aggregation page corresponding to the recommended object" in step 33. For example, the implementation of the "page exist operation triggered for the information aggregation page corresponding to the recommended object" is similar to the implementation of the "page exit operation triggered for the page for selecting attributes" in step 11, and details thereof are omitted herein for brevity.

From the related contents about steps 31-33, it could be learned that, in some application scenarios, in an event that the information feed page is being presented, which includes recommendation information of at least one recommended object, if a trigger operation for recommendation information of a recommended object is detected, an information aggregation page (e.g. the item detail page 400 in Fig. 4, the multi-item recommendation page 500 in Fig. 5, or the item detail page 700 in Fig. 7) corresponding to the recommended item is presented in full screen while the page for selecting attributes (e.g. the page for selecting attributes 401 in Fig. 4, the page for selecting attributes 501 in Fig. 5, or the page for selecting attributes 701 in Fig. 7) corresponding to the recommended object is being presented on the information aggregation page in a 7-split screen manner. Then, when a page exit operation (e.g. a click operation for the page closing control 403 in Fig. 4, a click operation for the page closing control 503 in Fig. 5, or a click operation for the page closing control 703 in Fig. 7), returning to the information aggregation page is performed, and after a page exit operation triggered for the information aggregation page was detected, returning to the information feed page is performed. In this way, a two-step return strategy can be implemented, to better meet the information viewing needs of users (e.g. needs for viewing some information on the information aggregation page) and further improve the user experience.

In the application scenario of implementing the object ordering process through step 31, if the information aggregation page involved in step 31 is an object aggregation page (e.g. the multi-item recommendation page 500 in Fig. 5, or the like), a user can view page for selecting attributess of different objects by means of the object aggregation page, so as to better meet the user's ordering need. On the basis, the present disclosure further provides a possible implementation of the information presenting method. In the implementation, the information presenting method may include at least step 31 described above, and step 34 which will be described below. Wherein, step 34 is executed after step 31.

Step 34: subsequent to presenting the page for selecting attributes of the recommended object on the information aggregation page corresponding to the recommended object if the information aggregation page corresponding to the recommended object is an object aggregation page, in response to a page switching operation triggered for the page for selecting attributes, presenting a page for selecting attributes of a target object corresponding to the recommended object, and the target object being determined based on the page switching operation.

The page switching operation functions to switch the page for selecting attributes being presented to a page for selecting attributes of other object. The page switching operation is not limited herein. For example, in some application scenarios, the page switching operation may include at least one swiping operation (e.g., an operation of swiping left, an operation of swiping right, or the like).

The "target object corresponding to the recommended object" is an object belonging to the page for selecting attributes to be presented and determined based on the page switching operation. The target object which is determined based on the page switching operation is not limited herein.

It is worth noting that the target object is not limited herein. For example, in an event that the object aggregation page is used to present object description information of a plurality of candidate objects arranged in sequence, which includes the at least one recommended object as described above, if a user triggers a swiping operation for the page for selecting attributes of the recommended object being presented, switch can be performed from the page for selecting attributes of the recommended object to a page for selecting attributes of a candidate object adjacent to the recommended object in the plurality of candidate objects; if a trigger operation for other candidate object on the object aggregation page is detected, switch can be performed from the page for selecting attributes of the recommended object to a page for selecting attributes of the "other candidate object."

From the related contents about steps 31 and 34, it could be learned that, in some application scenarios, when a page for selecting attributes of a recommended object is presented by means of an object aggregation page, a user cannot only view the page for selecting attributes of the recommended object by means of the object aggregation page, but can also view a page for selecting attributes of other object, thus better meeting the object selection needs and further improving the user experience.

On the basis of the related contents about the information presenting method, for ease of better understanding, description below will be provided in conjunction with two application scenarios.

Scenario I: if the information feeding page is only used to recommend a single object, the information presenting method may include steps 41-44 which will be described below.

Step 41: presenting the information feed page (e.g. the short video playing page 200 in Fig. 4 or 7), and presenting, on the information feed page, recommendation information (e.g. the item anchor 201 in Fig. 4 or 7) of a recommended object.

Step 42: in response to a trigger operation (e.g. the click operation triggered for the item anchor 201 in Fig. 4 or 7) for recommendation information of a recommended object presented on the information feed page, if a preset target condition is met, an object detail page corresponding to the recommended object (e.g. the item detail page 400 in Fig. 4, or the item detail page 700 in Fig. 7) is presented, and the page for selecting attributes of the recommended object is presented on the object detail page. For the page for selecting attributes, if the recommended object is an object of a single-specification type (i.e., the recommended object only has some specification attribute information in a fixed state), specification attribute information presented on the page for selecting attributes (e.g. the page for selecting attributes 401 in Fig. 4) of the recommended object in one or more attribute dimensions is all non-adjustable specification attribute information. However, if the recommended object is an object of a multi-specification type (i.e., the recommended object has some specification attribute information in a selectable state), the specification attribute information presented on the page for selecting attributes (e.g. the page for selecting attributes 701 in Fig. 7) of the recommended object in a portion or all of the attribute dimensions, to enable a user to determine specification attribute information in line with his/her need from the candidate specification attribute information.

Step 43: in response to a page exit operation (e.g., clicking the page closing control 403 in Fig. 4, or clicking the page closing control 703 in Fig. 7) triggered for the page for selecting attributes of the recommended object, presenting an object detail page (e.g. the item detail page 400 in Fig. 4, the item detail page in Fig. 7, or the item detail page 800 in Fig. 8) corresponding to the recommended object, so as to accomplish the objective of entering the object detail page from the page for selecting attributes.

Step 44: in response to a page exit operation triggered for the object detail page corresponding to the recommended object, presenting the information feed page.

From the related contents about steps 41-44, it could be learned that, in some application scenarios, if the information feed page is only used to recommend an object (e.g. the item in Fig. 4 or 7), and recommendation information of the object is presented on the information feed page, entering the page for selecting attributes can be implemented in one step in a manner of triggering the recommendation information, thus improving the ordering efficiency. The page for selecting attributes presents at least attribute information of the object, and the attribute information is determined based on a specification type (e.g. a single-specification type, a multi-specification type, or the like) of the object, to make the page for selecting attributes better fit for the ordering effect of objects differing in specification requirement.

Scenario II: if the information feed page is only used to recommend a plurality of objects, the information presenting method may include steps 51-55 which will be described below.

Step 51: presenting an information feed page (e.g. the short video playing page 200 in Fig. 5, or the like), and presenting, on the information feed page, recommendation information of a portion or all of a plurality of recommended objects.

It is worth noting that the implementation of step 51 is not limited herein. For ease of understanding, description will be made below in conjunction with some examples.

Example 1: in some application scenarios, if the information feed page is used to recommend a plurality of objects, step 51 may specifically include: presenting the information feed page, and directly presenting, on the information feed page, recommendation information of the plurality of recommended objects in a preset manner. Wherein, the preset manner can be set in advance according to the actual application scenario. The preset manner is not limited herein. For example, the preset manner may be a carousel manner for presenting recommendation information of those recommended objects. For another example, the preset manner may be using a plurality of cards to present recommendation information of those recommended objects, such that different cards are used to present recommendation information of different recommended objects.

Example 2: in some application scenarios, if the information feed page is used to recommend a plurality of recommended objects, step 51 may specifically include: presenting the information feed page, and presenting, on the information feed page, recommendation information of a recommended object ranked first in the plurality of recommended objects, to present, on the information feed page, recommendation information of the plurality of recommended objects in a preset manner after determining that a preset presenting condition is met. Wherein, the preset presenting condition can be set in advance according to an application scenario. For example, the preset presenting condition may specifically include: a playing progress of multimedia data in the information feed page reaches a preset progress threshold, or an operation triggered for the information feed page (e.g. a click operation triggered by the item anchor 201 in Fig. 5) is detected.

Step 52: in response to a trigger operation for recommendation information of a recommended object (e.g. Item 1 in Fig. 5), if a preset target condition is met, an object aggregation page (e.g., the multi-item recommendation page 500 in Fig. 5) corresponding to the recommended object is presented, and a page for selecting attributes of the recommended object is presented on the object aggregation page. For the page for selecting attributes, if the recommended object is an object of a single-specification type (i.e., the recommended object only has some specification attribute information in a fixed state), specification attribute information presented on the page for selecting attributes (e.g. the page for selecting attributes 501 in Fig. 5) of the recommended object in one or more attribute dimensions is all non-adjustable specification attribute information. However, if the recommended object is an object of a multi-specification type (i.e., the recommended object has some specification attribute information in a selectable state), specification attribute information presented on the page for selecting attributes of the recommended object in a portion or all of attribute dimensions includes a plurality of candidate specification attribute information, to enable a user to determine specification attribute information in line with his/her need from the candidate specification attribute information.

Step 53: when a page for selecting attributes of the recommended object is being presented on an object aggregation page corresponding to the recommended object, in response to a page switching operation triggered for the page for selecting attributes of the recommended object, presenting a page for selecting attributes of a target object corresponding to the recommended object; the target object being determined based on the page switching operation.

It is worth noting that the implementation of step 53 is similar to the implementation of step 34, and details thereof are omitted herein for brevity.

Step 54: when the page for selecting attributes of the recommended object is being presented on the object aggregation page corresponding to the recommended object, in response to a page exit operation (for example, clicking the page closing control 503 in Fig. 5) triggered for the page for selecting attributes of the recommended object, presenting an object aggregation page (e.g. the multi-item recommendation page 500 in Fig. 5) corresponding to the recommended object, to accomplish the objective of entering the object aggregation page from the page for selecting attributes.

Step 55: in response to a page exist operation triggered for the object aggregation page corresponding to the recommended object, presenting the information feed page.

From the related contents about steps 51-55, it could be learned that, in some application scenarios, if the information feed page is only used to recommend a plurality of objects, and the information feed page is presenting recommendation information of a portion or all of the plurality of object, entering a page for selecting attributes of an object can be achieved in one step by triggering recommendation information of the object, thus improving the ordering efficiency. Wherein, the page for selecting attributes presents at least attribute information of the object, and the attribute information is determined based on a specification type (e.g. a single-specification type, a multi-specification type, or the like) of the object, to make the page for selecting attributes better fit for the ordering effect of objects differing in specification requirement.

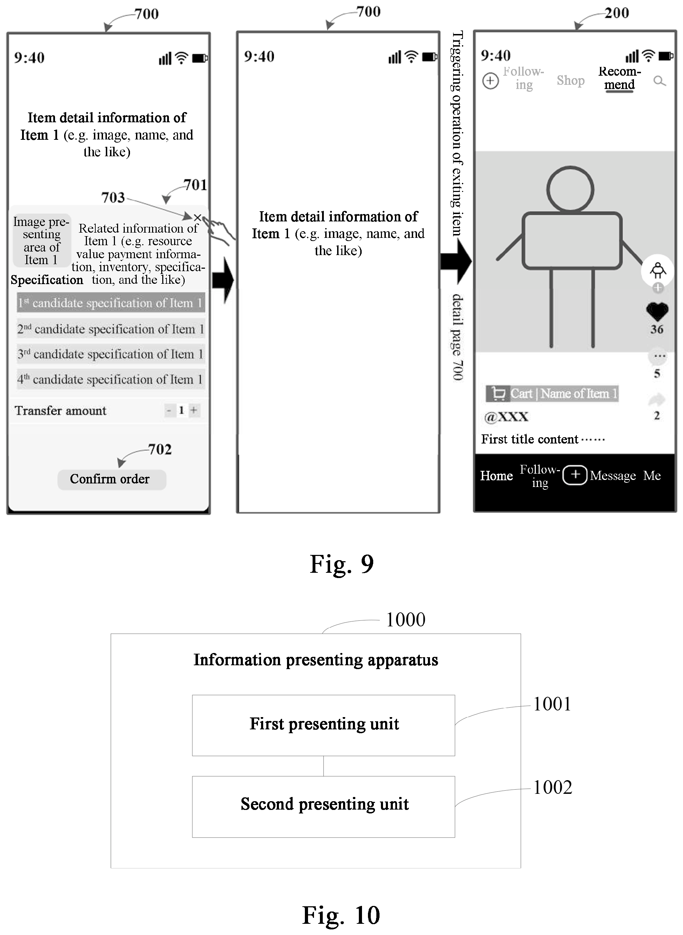

On the basis of the information presenting method, the embodiments of the present disclosure further provide an information presenting apparatus which will be explained and described below with reference to Fig. 10. Fig. 10 is a schematic diagram of a structure of an information presenting apparatus provided by embodiments of the present disclosure. For the technical details of the information presenting apparatus provided by embodiments of the present disclosure, see the related contents of the information presenting method described above.

As shown therein, the information presenting apparatus 1000 provided by embodiments of the present disclosure includes:
a first presenting unit 1001 for presenting an information feed page, wherein the information feed page comprises recommendation information of at least one recommended object; and
a second presenting unit 1002 for, in response to a trigger operation for recommendation information of a recommended object, presenting a page for selecting attributes of the recommended object, the page for selecting attributes comprising a placing order option and attribute information of the recommended object.

In a possible implementation, the second presenting unit 1002 is specifically used to: in response to a preset target condition being met, present the page for selecting attributes of the recommended object;
wherein the preset target condition comprises a number of placing order operations of objects performed by a login account within a first historical period being not less than a first number threshold, and a number of placing order operations of objects performed by the login account within a second historical period being less than a second number threshold; and/or
the preset target condition comprises: the recommended object belongs to a target object type.

In a possible implementation, the second presenting unit 1002 is specifically used to: in response to the trigger operation for the recommendation information of the recommended object, presenting an information aggregation page corresponding to the recommended page, and presenting the page for selecting attributes of the recommended object on the information aggregation page, wherein a size of a presenting area of the information aggregation page is greater than a size of a presenting area of the page for selecting attributes.

In a possible implementation, in the event that the information feed page is used to recommend a recommended object, the information aggregation page is an object detail page which is used to describe the recommended object in at least one dimension; or
in the event that the information feed page is used to recommend a plurality of candidate objects, the information aggregation page is an object aggregation page which is used to present object description information of the plurality of candidate objects, and the plurality of candidate objects comprises the at least one recommended object.

In a possible implementation, the information aggregation is an object aggregation page;
the information presenting apparatus 1000 further includes:
a first switching unit for, in response to a page switching operation triggered for the page for selecting attributes, presenting a page for selecting attributes of a target object corresponding to the recommended object, the target object being determined based on the page switching operation.

In a possible implementation, the information presenting apparatus 1000 further includes:
a first exit unit for, in response to a page exit operation triggered for the page for selecting attributes, presenting the information aggregation page; and
a second exit unit for, in response to a page exit operation triggered for the information aggregation page, presenting the information feed page.

In a possible implementation, the information feed page is used to recommend a recommended object;
the attribute information comprises object overview information and specification attribute information, wherein the specification attribute information in each attribute dimension is non-adjustable; or
the attribute information comprises object overview information and specification attribute information, wherein the specification information in at least one attribute dimension comprises a plurality of candidate specification attribute information.

In a possible implementation, the information feed page is used to recommend a plurality of recommended objects;
wherein the first presenting unit 1001 is specifically used to: present the information feed page, and present, on the information feed page, recommendation information of a portion or all of the plurality of recommended objects;
the attribute information comprises object overview information and specification attribute information, wherein the specification attribute information in each attribute dimension is non-adjustable; or
the attribute information comprises object overview information and specification attribute information, wherein the specification attribute information in at least one attribute dimension comprises a plurality of candidate specification attribute information.

In a possible implementation, the information presenting apparatus 1000 further includes:
a second switching unit for, in response to a page switching operation triggered for the page for selecting attributes of the recommended object, presenting a page for selecting attributes of a target object corresponding to the recommended object, and the target object being determined based on the page switching operation.

From the related contents about the information presenting apparatus 1000, it could be learned that, in an event that the information presenting apparatus 1000 provided by embodiments of the present disclosure is presenting an information feed page (e.g., a short video playing page, or the like) that includes recommendation information of at least one recommended object (e.g. item anchor(s) of one or more items, or the like), if a trigger operation for recommendation information of a recommended object (e.g. a click operation triggered for an item anchor of an item) is detected, a page for selecting attributes of the recommended object is presented. As such, a user cannot only view attribute information of the recommended object on the page for selecting attributes, but can also trigger an ordering process for the recommended object by means of a placing order option (e.g. a placing order button, or the like). In this way, the present disclosure can accomplish the objective of quickly entering a page for selecting attributes using recommendation information, and thus can effectively reduce the defects (e.g. poor user experience, and the like) caused by an excessively long interaction path to enter the page for selecting attributes, so as to further effectively improve the user experience.

In addition, the embodiments of the present disclosure further provide an electronic device, including: a processor and a memory; the memory for storing an instruction or computer program; the processor, when executing the instruction or computer program in the memory, causing the electronic device to perform any of the implementations of the information presenting method provided by embodiments of the present disclosure.

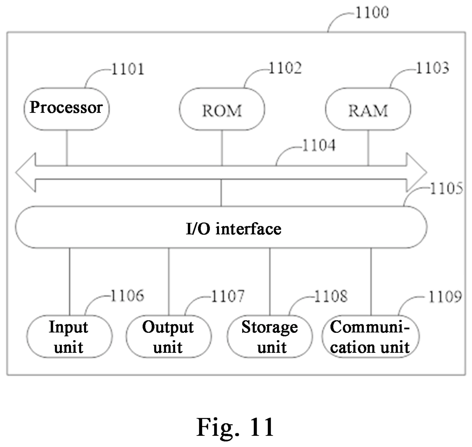

Fig. 11 illustrates a schematic diagram of a structure of an electronic device 1100 adapted to implement embodiments of the present disclosure. The terminal device according to the embodiments of the present disclosure may include, but is not limited to, a mobile terminal such as a mobile phone, a laptop computer, a digital broadcast receiver, a Personal Digital Assistant (PDA), a tablet computer (PAD), a Portable Multimedia Player (PMP), an on-vehicle terminal (e.g. an on-vehicle navigation terminal) or the like, or a fixed terminal such as a digital TV, a desktop computer or the like. The electronic device as shown in Fig. 11 is only an example, without suggesting any limitation to the functions and the application range of the embodiments of the present disclosure.

As shown therein, the electronic device 1100 may include a processor (e.g. a central processor, a graphics processor or the like) 1101, which can execute various acts and processing based on programs stored in a Read-Only Memory (ROM) 1102 or a program loaded from a storage unit 1108 to a Random Access Memory (RAM) 1103. RAM 1103 stores therein various programs and data required for operations of the electronic device 1100. The processor 1101, the ROM 1102 and the RAM 1103 are connected to one another via a bus 1104. An input/output (I/O) interface 1105 is also connected to the bus 1104.

Typically, the following units may be connected to the I/O interface 1105: an input unit 1106 including, for example, a touchscreen, a touch pad, a keyboard, a mouse, a camera, a microphone, an accelerometer, a gyroscope and the like; an output unit 1107 including, for example, a Liquid Crystal Display (LCD), a loudspeaker, a vibrator and the like; a memory 1108 including, for example, a tape, a hard drive and the like; and a communication unit 1109. The communication unit 1109 can allow wireless or wired communication of the electronic device 1100 with other devices to exchange data. Although Fig. 11 shows the electronic device 1100 including various units, it would be appreciated that not all of the units as shown are required to be implemented or provided. Alternatively, more or fewer units may be implemented or provided.

According to embodiments of the present disclosure, the processes described above with reference to the flowcharts may be implemented as computer software programs. For example, embodiments of the present disclosure include a computer program product comprising computer programs carried on a computer readable medium, where the computer programs containing program code are used for performing the methods as in the flowcharts. In those embodiments, the computer programs may be downloaded and installed from a network via the communication unit 1109, or may be installed from the memory 1108, or may be installed from the ROM 1102. The computer programs, when executed by the processor 1101, perform the above-described functions defined in the method according to the embodiments of the present disclosure.

The electronic device provided by the embodiments of the present disclosure and the method provided by the embodiments described above belong to the same invention conception. For the details omitted in this embodiment, see the embodiments described above. Those embodiments have the same advantageous effects as the embodiments described above.

The embodiments of the present disclosure further provide a computer readable storage medium having instructions or a computer program stored thereon, where the computer program, when executed by a processor, causes the processor to implement the information presenting method according to the embodiments of the present disclosure.

It should be noted that the computer readable medium according to the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a Random Access Memory (RAM), a Random-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing. In the present disclosure, a computer readable storage medium may be any tangible medium that can contain, or store, a program for use by or in connection with an instruction execution system, apparatus, or device. In contrast, in the present disclosure, a computer readable signal medium may include a propagated data signal with computer readable program code embodied therein, either in baseband or as part of a carrier wave. Such propagated data signal may take many forms, including, but not limited to, an electro-magnetic signal, an optical signal, or any suitable combination thereof. A computer readable signal medium may also be any computer readable medium that is not a computer readable storage medium and that can communicate, propagate, or transmit a program for use by or in connection with an instruction execution system, apparatus, or device. Program code embodied on a computer readable medium may be transmitted using any appropriate medium, including but not limited to: electrical wires, optical cables, RF (radio frequency), etc., or any suitable combination of the foregoing.

In some embodiments, the client and the server may perform communication by using any known network protocol such as Hyper Text Transfer Protocol (HTTP) or any network protocol to be developed, and may connect with digital data in any form or carried in any medium (for example, a communication network). The communication network includes a Local Area Network (LAN), a Wide Area Network (WAN), an international network (for example, the internet), a peer-to-peer network (e.g. ad hoc peer-to-peer network), and any known network or network to be developed.

The computer-readable medium may be the one included in the electronic device, or may be provided separately, rather than assembled in the electronic device.

The computer-readable medium carries one or more programs which, when executed by the electronic device, cause the electronic device to perform steps of the method as described above.

Computer program code for performing operations of the present disclosure may be written by using one or more program design language or any combination. The program design language includes, but is not limited to, object oriented program design language such as Java, Smalltalk and C++, and further includes conventional process-type program design language such as "C" or similar program design language. The program code may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a Local Area Network (LAN) and a Wide Area Network (WAN). Alternatively, the remote computer may connect to an external computer (such as achieving internet connection by services provided by the internet network service provider).

The flowchart and block diagrams in the drawings illustrate the architecture, functionality and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowcharts, and combinations of blocks in the block diagrams and/or flowcharts, can be implemented by special purpose hardware-based systems which perform the specified functions or acts, or combinations of special purpose hardware and computer instructions.

Related units for describing the embodiments of the present disclosure may be implemented in the form of software, or may be implemented in the form of hardware. In certain circumstances, the names of units/modules do not formulate limitation to the units *per se.*

The functions described above may be performed, at least in part, by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), Systems on Chip (SOCs), Complex Programmable Logic Devices (CPLDs), and the like.

In the context of this disclosure, a machine-readable medium may be a tangible medium that can contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of a computer-readable storage medium would include an electrical connection based on one or more wires, a portable computer diskette, a hard disk, an RAM, an ROM, an EPROM or flash memory, an optical fiber, a CD-ROM, an optical storage device, a magnetic storage device, or any suitable combination of the foregoing.

The embodiments in the specification are described in a progressive way, where emphasis of the description of each embodiment is put on the differences from other embodiments, and for same or similar parts thereof, references can be mutually made to the other embodiments. Particularly, a system or apparatus embodiment is similar to a method embodiment and therefore described briefly. For related parts, references can be made to related descriptions in the method embodiment.

It should be understood that in the present disclosure, "at least one (item)" refers to one or more and "a plurality of" refers to two or more. The term "and/or" is used for describing an association relationship between associated objects, and represents that three relationships may exist. For example, "A and/or B" may represent the following three cases: only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b," "a and c," "b and c," or "a, b, and c," where a, b, and c may be singular or plural.

The relationship terms as used herein, for example, "first", "second", and the like, are only intended for distinguishing an entity or operation from a further entity or operation, but not necessarily require or imply that those entities or operations should have any of such actual relationships or orders. In addition, the terms "include", "comprise", or any other variant thereof are intended to cover a non-exclusive inclusion, such that a process, method, article, or device including a series of elements not only include those elements, but also cover other elements not listed explicitly, or further cover inherent elements of the process, method, article, or device. Unless specified otherwise, elements defined by the expression "including one..." do not exclude presence of additional identical elements in the process, method, article, or device including those elements.

The steps of the method or algorithm described with reference to the embodiments disclosed herein may be implemented directly with hardware or software modules executed by a processor, or a combination thereof. The software modules may be arranged in a Random Access Memory (RAM), a memory, a Read-Only Memory (ROM), an electrically programmable ROM, an electrically erasable programmable ROM, a register, a hard disk, a removable disk, a CD-ROM, or a storage medium in any other form known in the art.

The previous description of the disclosed embodiments is provided to enable those skilled in the art to implement or apply the present disclosure. Various modifications to these embodiments will be readily apparent to those skilled in the art, and the generic principles defined herein may be applied to other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A method of presenting information, comprising:
presenting an information feed page, wherein the information feed page comprises recommendation information of at least one recommended object; and
in response to a trigger operation for recommendation information of a recommended object, presenting a page for selecting attributes of the recommended object, the page for selecting attributes comprising a placing order option and attribute information of the recommended object.

2. The method of claim 1, wherein presenting the page for selecting attributes of the recommended object comprises:
in response to a preset target condition being met, presenting the page for selecting attributes of the recommended object;
wherein the preset target condition comprises a number of placing order operations of objects performed by a login account within a first historical period being not less than a first number threshold, and a number of placing order operations of objects performed by the login account within a second historical period being less than a second number threshold; and/or
the preset target condition comprises the recommended object belonging to a target object type.

3. The method of claim 1, wherein, in response to the trigger operation for the recommendation information of the recommended object, presenting the page for selecting attributes of the recommended object, comprises:
in response to the trigger operation for the recommendation information of the recommended object, presenting an information aggregation page corresponding to the recommended object, and presenting the page for selecting attributes of the recommended object on the information aggregation page, wherein a size of a presenting area of the information aggregation page is greater than a size of a presenting area of the page for selecting attributes.

4. The method of claim 3, wherein, in a case that the information feed page is used to recommend a recommended object, the information aggregation page is an object detail page which is used to describe the recommended object in at least one dimension; or
in a case that the information feed page is used to recommend a plurality of candidate objects, the information aggregation page is an object aggregation page which is used to present object description information of the plurality of candidate objects, and the plurality of candidate objects comprises the at least one recommended object.

5. The method of claim 3, wherein the information aggregation page is an object aggregation page; and
the method further comprises after presenting the page for selecting attributes of the recommended object on the information aggregation page:
in response to a page switching operation triggered for the page for selecting attributes, presenting a page for selecting attributes of a target object corresponding to the recommended object, and the target object being determined based on the page switching operation.

6. The method of claim 3, further comprising after presenting the page for selecting attributes of the recommended object on the information aggregation page:
in response to a page exit operation triggered for the page for selecting attributes, presenting the information aggregation page; and
in response to a page exit operation triggered for the information aggregation page, presenting the information feed page.

7. The method of claim 1, wherein the information feed page is used to recommend a recommended object;
the attribute information comprises object overview information and specification attribute information, wherein the specification attribute information in each attribute dimension is non-adjustable; or
the attribute information comprises object overview information and specification attribute information, wherein the specification information in at least one attribute dimension comprises a plurality of pieces of candidate specification attribute information.

8. The method of claim 1, wherein the information feed page is used to recommend a plurality of recommended object;
wherein presenting the information feed page comprises:
presenting the information feed page, and presenting, on the information feed page, recommendation information of a portion or all of the plurality of recommended objects;
the attribute information comprises object overview information and specification attribute information, wherein the specification attribute information in each attribute dimension is non-adjustable; or
the attribute information comprises object overview information and specification attribute information, wherein the specification attribute information in at least one attribute dimension comprises a plurality of pieces of candidate specification attribute information.

9. The method of claim 8, further comprising after presenting the page for selecting attributes of the recommended object in response to the trigger operation for the recommendation information of the recommended object:
in response to a page switching operation triggered for the page for selecting attributes of the recommended object, presenting a page for selecting attributes of a target object corresponding to the recommended object, and the target object being determined based on the page switching operation.

10. An apparatus for presenting information, comprising:
a first presenting unit configured to present an information feed page, wherein the information feed page comprises recommendation information of at least one recommended object; and
a second presenting unit configured to: in response to a trigger operation for recommendation information of a recommended object, present a page for selecting attributes of the recommended object, the page for selecting attributes comprising a placing order option and attribute information of the recommended object.

11. An electronic device, comprising: a processor and a memory;
wherein the memory is configured to store an instruction or computer program; and
the processor is configured to execute the instruction or computer program in the memory, to cause the electronic device to perform the method of any of claims 1-9.

12. A computer readable medium having an instruction or computer program stored therein, wherein the instruction or computer program, when executed on a device, causes the device to perform the method of any of claims 1-9.
